# EUROPEAN PATENT SPECIFICATION

(11) **EP 1 197 404 B1**
(45) Date of publication and mention of the grant of the patent: **07.09.2005**
(21) Application number: 01850168.4
(22) Date of filing: 10.10.2001
(51) Int. Cl.: B60R 22/46

(54) **Safety belt pretensioner and force limiter**
Gurtstraffer und Kraftbegrenzer
Prétensionneur de ceinture de sécurité muni d'un limiteur d'efforts

(30) Priority: 12.10.2000 SE 0003682
(43) Date of publication of application: 17.04.2002
(73) Proprietor: VOLVO CAR CORPORATION, 405 31 Göteborg (SE)
(72) Inventor: Jernström, Clas, 436 45 Askim (SE)
(74) Representative: Hellbom, Lars Olof

(56) References cited:
- GB-A- 2 345 890
- US-A- 5 699 976
- US-A- 5 794 876

## Description

The present invention relates to a device for pretensioning and force-limiting a safety belt web joined to a reel mechanism in a vehicle, comprising a cylinder, a piston which is displaceable in the cylinder and has a piston rod, which is joined to one side of the piston and extends through an opening in one end wall of the cylinder, a motion-transmitting element acting between the piston rod and the reel mechanism, said element upon displacement of the piston in one direction achieving rotation of the reel mechanism in the winding-up direction of the belt web, a pyrotechnic charge which, when detonated, causes a pressure increase in a cylinder chamber between the piston and a cylinder end wall for displacement of the piston in said one direction, wherein the motion-transmitting element is so joined to a ring gear of a planetary gear set that the displacement of the piston in the cylinder results in rotation of the ring gear, and that the planetary gear set is so disposed and coupled to the reel mechanism that the gear ratio between the ring gear and the reel mechanism is 1:1 upon rotation of the ring gear in the winding-up direction of the web.

Belt pretensioners with force limiters are at present in general use for safety belts in motor vehicles in order to, in a collision, take up the slack between the belt windings on the spool of the reel mechanism and, at the same time, tension up the belt against the body of the occupant, so as to avoid, as much as possible, sliding under the belt or jerking with accompanying whiplash. The force-limiting function, which is achieved by control feeding-out of a predetermined length of the belt after pretensioning, thus reduces the force between the occupant and the belt web up to the point when the occupant must be caught completely by the belt to prevent his head from hitting interior components, e.g. the steering wheel of the vehicle.

In a previously known design, the force-limiting after pretensioning, when the belt is fed out due to the occupant load on the belt caused by vehicle retardation, is achieved by plastic deformation of a torsion element in the reel mechanism. In practical embodiments, at the desired force level, the maximum possible feed-out length of the belt is limited, by reasons of design, to circa 300 mm. MADYMO simulations with 95 percentile dummy and 35 miles/hour crash velocity have shown that the belt feed-out length should be on the order of 450 mm to achieve optimum effect.

A purpose of the present invention is to achieve a device of the type described by way of introduction which makes possible, during the force-limiting phase, controlled feed-out of the above described desired belt length of circa 450 mm.

This is achieved according to the invention by virtue of the features of claim 1.

By utilizing a planetary gear set, the desired belt feed-out length can be simply achieved by adapting the gear up of the planetary gear set to the stroke length of the piston and the desired belt feed-out length.

In a further development of the device according to the invention, said cylinder chamber has an outlet, which communicates with a spill valve which can be set between various degrees of opening and is controlled by a control unit in response to signals from a sensor which senses the weight of the occupant. The degree of opening the valve determines the resistance against the return stroke of the piston during the force-limiting phase, which means that the larger the valve opening is, the less will be the resisting force of the belt against the occupant. By regulating the valve opening in relation to the weight of the occupant, the force limitation is regulated relative to the weight of the occupant.

In yet a further development of the device according to the invention, the spill valve can be set to a closed position. The control unit is in this case also coordinated with a positional, so-called roll-over sensor, which senses the position of the vehicle. If the sensor indicates that the vehicle is about to end up upside-down after the pretensioning phase, the control unit will close the valve, which means that the occupant will be held securely against the seat and no belt feed-out can occur. To assure that the piston remains in its position when the valve has been closed, in a preferred embodiment said cylinder chamber is delimited between the side of the piston opposite to the piston rod and the second end wall of the cylinder, the motion-transmitting element being arranged to rotate the reel mechanism in the winding-up direction of the belt when the piston is displaced in the protrusion direction of the piston rod. This provides an expansion space without a through-hole for the piston rod, which would otherwise be a potential path for leakage.

The invention will now be described in more detail below with reference to examples shown in the accompanying drawings, where
Fig. 1a shows a schematic longitudinal section through one embodiment of a piston-cylinder device with a valve and a motion-transmitting element according to the invention, and Fig. 1b shows an enlargement of the valve in Fig. 1a with associated means for controlling the valve,
Fig. 2 shows a schematic longitudinal section through a reel mechanism with a first embodiment of a planetary gear set,
Fig. 3a shows a partial enlargement of the planetary gear set in Fig. 2 with associated blocking means in the pretensioning position, and Fig. 3b shows a schematic side view of the gear set in Fig. 3a,
Fig. 4a shows a partial enlargement of the planetary gear set in Fig. 2 with associated blocking means in the force-limiting position, and Fig. 4b shows a schematic side view of the gear set in Fig. 4a,
Fig. 5 shows a schematic longitudinal section through a second embodiment of a planetary gear set,
Fig. 6 shows a diagram of the web displacement as a function of time during the pretensioning and force-limiting stages.

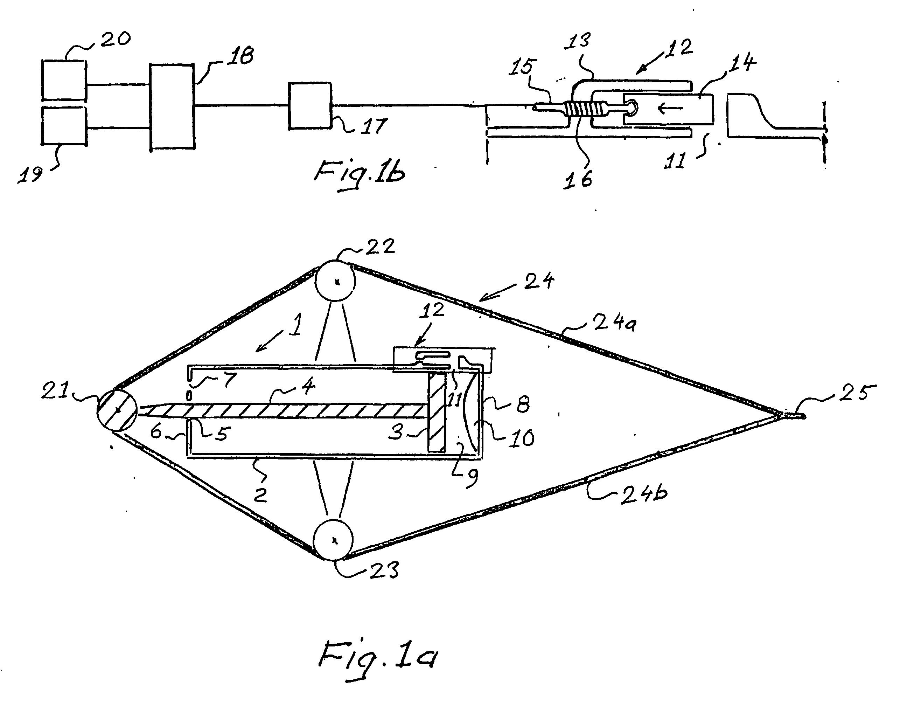

In Fig. 1a, 1 designates a piston-cylinder device with a cylinder 2 and a piston 3 displaceable in the cylinder. The piston 3 is joined to a piston rod 4, which extends through an opening 5 in one end wall 6 of the cylinder 2. The end wall also has a ventilation opening 7. The opposite end wall 8 of the cylinder 2 and the piston 3 delimit an expansion chamber 9, in which a pyrotechnic charge 10 with a detonator is placed. The charge 10 is designed to be exploded by retardation-sensitive means, which are known per se and not shown in more detail here. The cylinder wall in the area of the expansion chamber 9 is made with an opening 11 leading to a valve device 12, through which propellant gas in the expansion chamber can be led out to the environment.

The valve device 12 (Fig. 1b) has a valve slide 14 displaceable in a housing 13, joined to a rotatable set screw 15 in a threaded bore 16 in the housing. The set screw 15 is rotatable with the aid of a servomotor 17, which is controlled by an electronic control unit 18 as a function of signals, firstly, from a weight-sensitive sensor 19, which can be built in to the weight-bearing portion of the vehicle seat (not shown) to register the weight of the person sitting in the seat, and secondly, from a so-called roll-over sensor 20 which senses if the vehicle is about to end up upside-down.

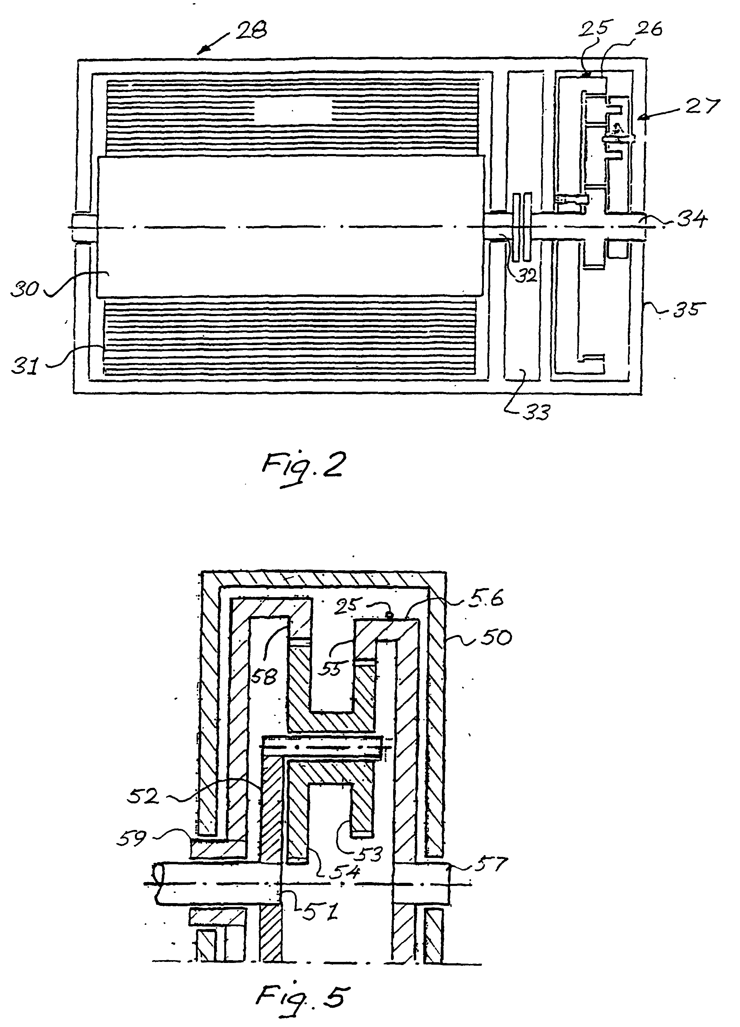

At the end of the piston rod 4, there is a roller 21, and on either side of the cylinder 2 there are two rollers 22 and 23, over which there runs a closed cable loop 24. The two parts 24a and 24b of the loop converge in a single cable 25 which is joined to a drum 26, which, via a planetary gear set 27, is arranged to drive a reel mechanism (Fig. 2) which is known per se and is generally designated 28, as will be described below. This arrangement with a pushing piston rod instead of a pulling piston rod eliminates one opening in the end wall 8 on the expansion chamber side of the piston 3. The arrangement with a cable loop 24 around the piston assures that there will be a symmetrical load on the piston rod 4.

When the passenger(s) is(are) seated and the driver turns the ignition key, the sensors 19 and 20 cooperating with the control unit 18 are activated, and the control unit 18, via the servomotor 17, sets the valve slide 14 to a position which is calculated to provide the optimal catch sequence for the occupant. The relationship between the occupant's weight and the size of the valve opening can be determined by tests and be stored in the control unit. In general, the valve opening is less the higher the weight. If the roll-over sensor indicates that the vehicle is about to end up upside-down, the control unit 18 closes the valve 12, so that the reel mechanism 28 will be fixed in its pretensioning position by blocking the piston 3. The lack of a piston rod opening in the expansion chamber 9 assures that gas cannot leak out and change the position of the piston.

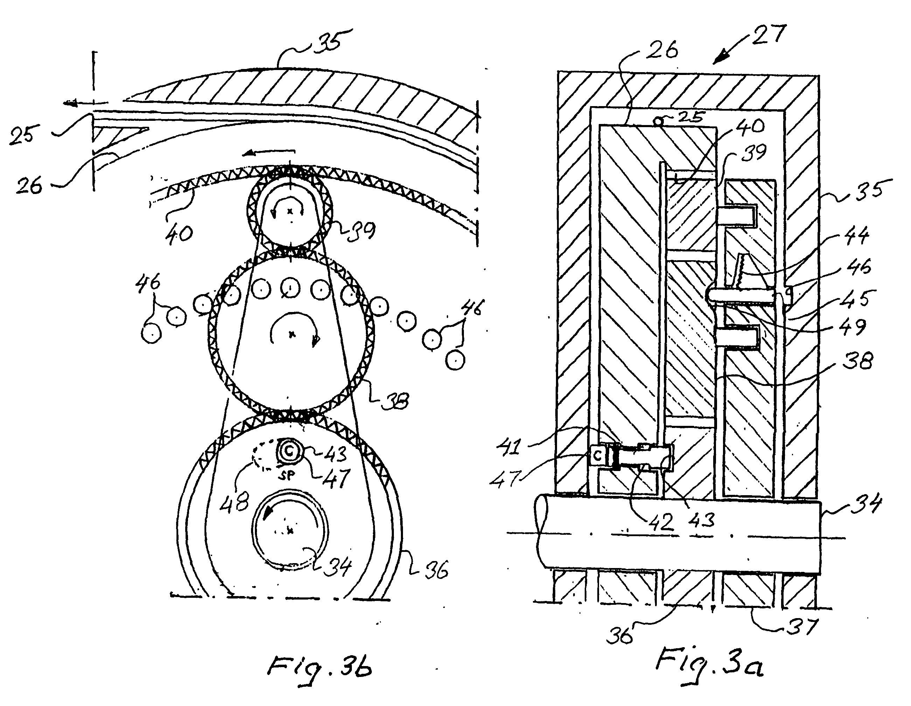

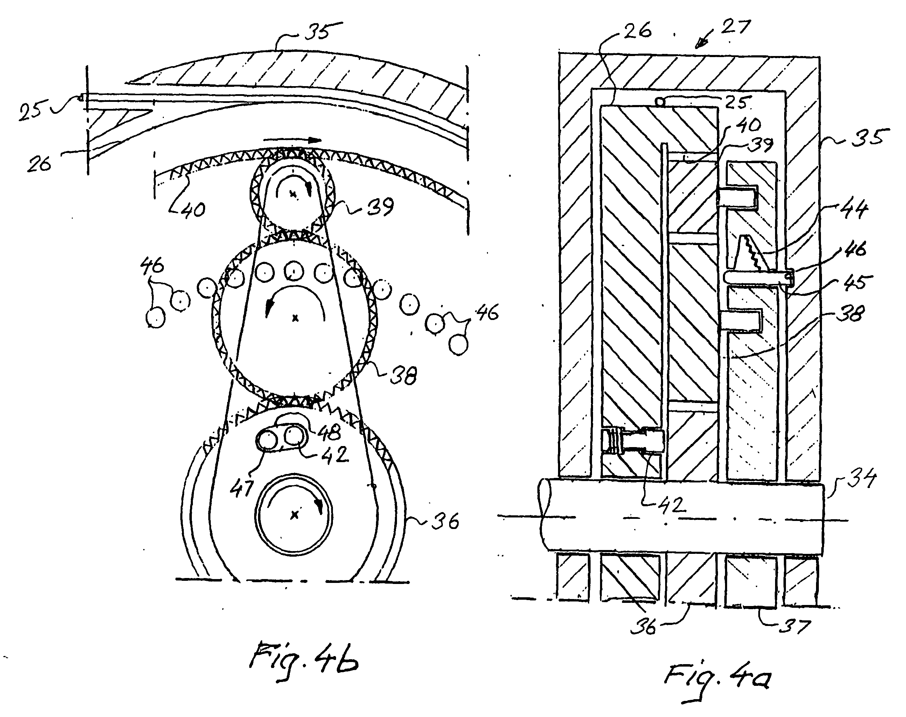

Fig. 2 shows the planetary gear set 27 and the reel mechanism 28. The latter is of a type known per se and has a belt bobbin 30 with a belt web 31 wound up on the bobbin. The bobbin has a shaft 32 which, via a web jerk and compartment retardation sensitive retractor mechanism 33 (indicated only schematically here), is joined to a shaft 34 of the planetary gear set 27, which is shown in more detail in Fig. 3a, 3b, 4a and 4b. The shaft 34 is rotatably mounted in a housing 35, which is solidly joined, or made in one piece with the housing in which the bobbin shaft 32 is mounted. The housing 35 is thus solidly mounted in the vehicle. The planetary gear set shaft 34 carries a sun gear 36, engaging first planet gears 38 carried by a planet carrier 27. The planet gears 38 engage second planet gears 39 carried by a second planet carrier. The second planet gears 39 engage in turn a toothed rim 40 on the interior of the drum 26, which thus forms the ring gear of the planetary gear set 27. With the aid of first blocking means in the form of a spring 41 loaded pin 42 in the end wall of the drum. The pin 42 extends into a cavity 43 in the sun gear 36, and thus the ring gear 40 and consequently also the drum can be locked to the sun gear 36 (Figs. 3a and 3b). With the aid of other blocking means in the form of a second pin 45, loaded by a snap-spring 44 and disposed in a bore in the planet gear carrier 37, said pin projecting into a cavity 46 in the housing 35, the planet gear carrier 37 can be locked to the housing (Figs. 4a and 4b).

The starting position is the position shown in Figs. 3a and 3b, i.e. the pin 42 locks the sun gear 36 to the ring gear 40, which means a gear ratio of 1:1 between the shaft 34 and the drum 26. The pin 42 is kept in the position shown by a cylindrical body 47, which is held in an arcuate groove 48 in the end wall of the drum. In a collision, the retractor mechanism 33 will lock together the shaft 32 of the bobbin and the planetary gear set 34 at the same as the charge 10 in the cylinder expansion chamber 9 is detonated. The cable 25, which is joined to and is somewhat wound up on the drum, will now turn the drum an angle which is dependent on the length of stroke of the piston 3 and the diameter of the drum 26. The belt web 31 is now pretensioned so that the slack of the web windings on the bobbin 30 is taken up and the belt is tightened against the occupant, the tightening sequence being determined by the setting of the valve 12.

When the piston 3 has reached its end position in the cylinder 2, the pretensioning is completed and the forces on the belt web change directions as the occupant loads the belt during the retardation. This will also reverse the torque direction in the planetary gear set, thereby initiating the force-limiting stage, which is illustrated in Figs. 4a and 4b. Thus, the shaft 34 with the sun gear 36 begins to rotate in a direction opposite to the original pretensioning direction, and the cylindrical body 47, which is held by the friction against the housing 35 under the influence of the spring 41, is displaced in the groove 48 to the position shown in Fig. 4b, which means that the spring 41 can move the pin 42 out of the cavity 43, as is shown in Fig. 4a. The sun gear 36 can now rotate relative to the drum 26. The torque will be transmitted from the sun gear 36 to the planet gears 38 and 39 and to the planet gear carrier 37, prompting an initial relative movement between the first planet gear 38 and the planet gear carrier 37. The pin 45, which during the pretensioning stage was kept with its end inserted into a flanked depression 49 in the first planet gear 38 under the force of the snap-spring 44, will now be pressed towards the planet gear carrier 37, which is provided, along a circle directly opposite the pin, with a plurality of uniformly spaced depressions 46. The snap-spring 44 will snap the opposite end of the pin into one of these depressions 46 so that the planet gear carrier 37 will be locked to the housing 35. There will thereby be a gear ratio between the shaft 34 of the planetary gear set and its ring gear 40, corresponding to the relationship between the number of teeth on the sun gear 36 and the ring gear 40. A similar ratio is obtained between the return stroke of the piston and the feed-out length of the belt. The force under which this process occurs is determined by the setting of the valve 12 and is thus adapted to the weight of the occupant.

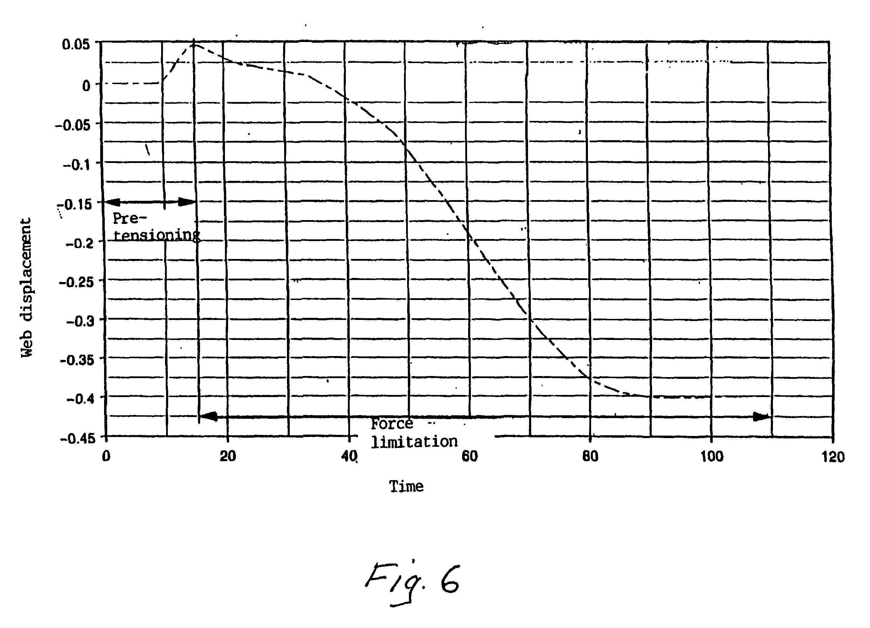

The belt displacement as a function of time for one embodiment of the device according to the invention is illustrated in the diagram in Fig. 6. As can be seen from the diagram, the belt, during the pretensioning phase, is pulled in up to 5 cm in circa 15 ms and that the belt is thereafter fed out, during the force-limiting phase, 45 cm in circa 75 ms, which means that the entire belt displacement process takes circa 90 ms and that the gear ratio in the planetary gear set is circa 9:1, if the diameter of the drum and the medium diameter of the fed out web windings from the bobbin are approximately equal.

In order to obtain a large gear ratio in the planetary gear set, without the diameter of the drum tending to be so large that space problems are created, it is most suitable to arrange the gearing in two steps. One example of such a planetary gear set is shown in Fig. 5. The gear set has a housing 50, in which a first shaft 51 is rotatably mounted. The shaft 51 carries a planet gear carrier 52, on which first and second planet gears 53 and 54, solidly joined to each other, are mounted. A first ring gear 55, disposed on the inside of a drum 56 joined to the cable 25, is joined to a second shaft 57 mounted in the housing. The first ring gear 55 engages the first planet gears 53. A second ring gear 58 engages the second planet gears 54 and is joined to a sleeve 59, which is mounted concentrically in the housing with the first shaft 51, which is connectable to the belt bobbin shaft with the aid of a belt jerk and passenger compartment retardation-sensitive retractor mechanism (not shown in more detail here). With the aid of blocking means (not shown in more detail here), which can be one-way clutches, sawtooth blocking mechanisms or snap-locks of a type known per se, during the pretensioning phase the first shaft 51 can be locked relative to the second shaft 57 to establish a gear ratio of 1:1, and, during the force-limiting phase, the second ring gear 58 can be locked to the housing 50, while the shafts 51 and 57 are released relative to each other, thus providing a high gear ratio between the shafts 51 and 57.

The invention makes possible precision adaption of the catching phase to the weight of the occupant, both during the pretensioning of the belt and force-limiting during the subsequent belt feed-out. The possibility of having a long belt feed-out makes it possible to optimize the force-limiting phase. Finally, the arrangement makes possible a roll-over function by virtue of the fact that the valve can be closed after the pretensioning phase so that the occupant is held securely in his seat.

## Claims

1. Device for pretensioning and force-limiting a safety belt web (31) joined to a reel mechanism (28) in a vehicle, comprising a cylinder (2), a piston (3) which is displaceable in the cylinder and has a piston rod (4), which is joined to one side of the piston and extends through an opening (5) in one end wall (6) of the cylinder, a motion-transmitting element (24, 25) acting between the piston rod and the reel mechanism, said element upon displacement of the piston in one direction achieving rotation of the reel mechanism in the winding-up direction of the belt web, a pyrotechnic charge (10) which, when detonated, causes a pressure increase in a cylinder chamber (9) between the piston and a cylinder end wall (8) for displacement of the piston in said one direction, said motion-transmitting element (24, 25) being so joined to a ring gear (40, 55) of a planetary gear set (27; 50), that displacement of the piston (3) in the cylinder (2) results in rotation of the ring gear, and that the planetary gear set is so disposed and coupled to the reel mechanism (28) that the gear ratio between the ring gear and the reel mechanism is 1:1 upon rotation of the ring gear in the winding-up direction of the web, **characterized in that** the planetary gear set is so disposed that the gear ratio between the ring gear and the reel mechanism is higher when rotating in the opposite direction, whereby the return movement of the piston over a certain distance in the cylinder corresponds to a several times longer feed-out of the web (31) from the reel mechanism.

2. Device according to claim 1, **characterized in that** the motion-transmitting element (24, 25) is elongated and flexible and is joined to and partially wound up on a drum (26; 56), which is solidly joined to the ring gear (40, 55) of the planetary gear set.

3. Device according to claim 2, **characterized in that** the inside of the drum (26) forms a ring gear (40) of a planetary gear set, which has a sun gear (36) with a shaft (34), which can be coupled together with a shaft (32) in the reel mechanism (28), and that blocking means (42, 45) are arranged which, upon rotation of the drum in the winding-up direction of the reel mechanism, lock the drum and the sun gear together and which, upon rotation in the opposite direction, release the sun gear from the drum and block the planet gear carrier of the planetary gear set against rotation.

4. Device according to claim 2, **characterized in that** the inside of the drum (56) forms a ring gear (55), which engages first planet gears (53) on a planet gear carrier (52), which can be coupled together with a shaft (32) in the reel mechanism (28), that second planet gears (54) on the planet gear carrier are solidly joined to the first planet gears and engage a second ring gear (58), and that blocking means are arranged which, upon rotation of the drum in the winding-up direction of the reel mechanism, lock the drum and the planet gear carrier together and which, upon rotation of the drum in the opposite direction, release the drum from the planet gear carrier and block the second ring gear against rotation.

5. Device according to one of claims 1 - 4, **characterized in that** said cylinder chamber (9) has an outlet (11), which communicates with a spill valve (12), which can be set between various degrees of opening.

6. Device according to claim 5, **characterized in that** the spill valve (12) is continuously adjustable between various degrees of opening and a closed position.

7. Device according to claim 6, **characterized in that** the spill valve (12) has a valve element (14) which can be set by a servo unit (17), which is controlled by a control unit (18) as a function of signals from a sensor (19) which senses the weight of the occupant.

8. Device according to claim 7, **characterized in that** said cylinder chamber (9) is delimited between the side of the piston (3) opposite to the piston rod and the second end wall (8) of the cylinder, that the motion-transmitting element (24, 25) is disposed to rotate the reel mechanism (28) in the winding-up direction of the belt web, when the piston is displaced in the protruding direction of the piston rod (4), that the control unit (18) is coordinated with a positional sensor (20) which senses the position of the vehicle, and that the control unit is arranged to close the spill valve upon a signal from the positional sensor indicating that the vehicle is about to end up upside-down.

## Patentansprüche

1. Vorrichtung zum Vorspannen und zum Begrenzen der Kraft einer Sicherheitsgurtbahn (31), die mit einem Aufwickelmechanismus (28) in einem Fahrzeug verbunden ist, mit einem Zylinder (2), einem Kolben (3), der in dem Zylinder verstellbar ist, und eine Kolbenstange (4) aufweist, die mit einer Seite des Kolbens verbunden ist, und sich durch eine Öffnung (5) in einer Endwand (6) des Zylinders erstreckt, einem Bewegungsübertragungselement (24, 25), das zwischen der Kolbenstange und dem Aufwickelmechanismus einwirkt, wobei das Element nach Verstellung des Kolbens in eine Richtung eine Drehung des Aufwickelmechanismus in der Aufwickelrichtung der Gurtbahn erzielt, einer pyrotechnischen Ladung (10), die, wenn sie zur Explosion gebracht wird, eine Druckerhöhung in einer Zylinderkammer (9) zwischen dem Kolben und einer Zylinderendwand (8) zum Verstellen des Kolbens in die eine Richtung hervorruft, wobei das Bewegungsübertragungselement (24, 25) so mit einem Hohlrad (40, 55) einer Planetengetriebegruppe (27; 50) verbunden ist, dass eine Verstellung des Kolbens (3) in dem Zylinder (2) zu einer Drehung des Hohlrades führt, und die Planetengetriebegruppe so angeordnet und mit dem Aufwickelmechanismus (28) gekuppelt ist, dass das Untersetzungsverhältnis zwischen dem Hohlrad und dem Aufwickelmechanismus bei Drehung des Hohlrades in Aufwickelrichtung der Bahn gleich 1:1 ist, **dadurch gekennzeichnet, dass** die Planetengetriebegruppe so angeordnet ist, dass das Untersetzungsverhältnis zwischen dem Hohlrad und dem Aufwickelmechanismus höher ist, wenn eine Drehung in der entgegengesetzten Richtung erfolgt, wodurch die Rückstellbewegung des Kolbens über eine bestimmte Entfernung in dem Zylinder einem mehrfach größeren Abwickeln der Bahn (31) von dem Aufwickelmechanismus entspricht.

2. Vorrichtung nach Anspruch 1, **dadurch gekennzeichnet, dass** das Bewegungsübertragungselement (24, 25) länglich und flexibel ist, und mit einer Trommel (26; 56) verbunden und teilweise auf diese aufgewickelt ist, die fest mit dem Hohlrad (40, 55) der Planetengetriebegruppe verbunden ist.

3. Vorrichtung nach Anspruch 2, **dadurch gekennzeichnet, dass** das Innere der Trommel (26) ein Hohlrad (40) einer Planetengetriebegruppe bildet, welche ein Sonnenrad (36) mit einer Welle (34) aufweist, die mit einer Welle (32) in dem Aufwickelmechanismus (28) zusammengekuppelt werden kann, und Sperrvorrichtungen (42, 45) vorgesehen sind, die bei Drehung der Trommel in Aufwickelrichtung des Aufwickelmechanismus die Trommel und das Sonnenrad miteinander verriegeln, und bei Drehung in entgegengesetzter Richtung das Sonnenrad von der Trommel freigeben, und den Planetenradträger der Planetengetriebegruppe gegen eine Drehung sperren.

4. Vorrichtung nach Anspruch 2, **dadurch gekennzeichnet, dass** das Innere der Trommel (56) ein Hohlrad (55) bildet, welches im Eingriff mit ersten Planetenrädern (53) auf einem Planetenradträger (52) steht, der mit einer Welle (32) in dem Aufwickelmechanismus (28) zusammengekuppelt werden kann, zweite Planetenräder (54) auf dem Planetenradträger fest mit den ersten Planetenrädern verbunden sind, und in Eingriff mit einem zweiten Hohlrad (58) stehen, und Sperrvorrichtungen vorgesehen sind, die bei Drehung der Trommel in Aufwickelrichtung des Aufwickelmechanismus die Trommel und den Planetenradträger miteinander verriegeln, und bei Drehung der Trommel in der entgegengesetzten Richtung die Trommel von dem Planetenradträger lösen, und das zweite Hohlrad gegen eine Drehung sperren.

5. Vorrichtung nach einem der Ansprüche 1 bis 4, **dadurch gekennzeichnet, dass** die Zylinderkammer (9) einen Auslass (11) aufweist, der mit einem Überströmventil (12) in Verbindung steht, das zwischen verschiedenen Öffnungsgraden eingestellt werden kann.

6. Vorrichtung nach Anspruch 5, **dadurch gekennzeichnet, dass** das Überströmventil (12) kontinuierlich zwischen verschiedenen Öffnungsgraden und einer geschlossenen Lage einstellbar ist.

7. Vorrichtung nach Anspruch 6, **dadurch gekennzeichnet, dass** das Überströmventil (12) ein Ventilelement (14) aufweist, das durch eine Servoeinheit (17) eingestellt werden kann, die von einer Steuereinheit (18) in Abhängigkeit von Signalen von einem Sensor (19) gesteuert wird, der das Gewicht des Insassen erfasst.

8. Vorrichtung nach Anspruch 7, **dadurch gekennzeichnet, dass** die Zylinderkammer (9) zwischen der Seite des Kolbens (3) entgegengesetzt zur Kolbenstange und der zweiten Endwand (8) des Zylinders begrenzt ist, das Bewegungsübertragungselement (24, 25) so angeordnet ist, dass es den Aufwickelmechanismus (28) in der Aufwickelrichtung der Gurtbahn dreht, wenn der Kolben in Richtung des Vorspringens der Kolbenstange (5) verstellt wird, die Steuereinheit (18) mit einem Positionssensor (20) koordiniert ist, der die Lage des Fahrzeugs erfasst, und die Steuereinheit so ausgebildet ist, dass sie das Überströmventil bei einem Signal von dem Positionssensor schließt, welches anzeigt, dass das Fahrzeug kopfüber liegen bleiben wird.

## Revendications

1. Un dispositif pour la précontrainte et la limite d'effort d'une sangle de ceinture de sécurité (31) reliée à un mécanisme enrouleur (28) dans un véhicule, comportant un cylindre (2), un piston (3) qui est déplaçable dans le cylindre et présente une tige de piston (4), laquelle est reliée à un côté du piston et s'étend au travers d'une ouverture (5) dans une paroi d'extrémité (6) du cylindre, un élément transmetteur de mouvement (24, 25) agissant entre la tige de piston et le mécanisme enrouleur, ledit élément lors d'un déplacement du piston dans une direction exécutant une rotation du mécanisme enrouleur dans la direction de rebobinage de la sangle de ceinture, une charge pyrotechnique (10) qui, lorsque détonnée, cause une augmentation de pression dans une chambre de cylindre (9) entre le piston et une paroi d'extrémité du cylindre (8) pour un déplacement du piston dans ladite direction, ledit élément transmetteur de mouvement (24, 25) étant relié à une couronne (40, 55) d'un train planétaire (27; 50), afin que le déplacement du piston (3) dans le cylindre (2) provoque une rotation de la couronne, et afin que le train planétaire soit déplacé et ainsi couplé au mécanisme enrouleur (28) afin que le rapport d'engrenage entre la couronne et le mécanisme enrouleur soit 1:1 lors d'une rotation de la couronne dans la direction de rebobinage de la sangle, **caractérisé en ce que** le train planétaire est déplacé afin que le rapport d'engrenage entre la couronne et le mécanisme enrouleur soit plus élevé lors d'une rotation dans la direction opposée, ce par quoi le mouvement de retour du piston d'une certaine distance dans le cylindre correspond à un déroulement plusieurs fois plus long de la sangle (31) du mécanisme enrouleur.

2. Un dispositif selon la revendication 1, **caractérisé en ce que** l'élément transmetteur de mouvement (24, 25) est allongé et flexible et il est relié à ainsi que partiellement embobiné sur un tambour (26; 56), lequel est solidement relié à la couronne (40, 55) du train planétaire.

3. Un dispositif selon la revendication 2, **caractérisé en ce que** l'intérieur du tambour (26) forme une couronne (40) d'un train planétaire, qui présente un pignon soleil (36) avec un arbre (34), qui peut être couplé ensemble avec un arbre (32) dans le mécanisme enrouleur (28), et **en ce que** des moyens de blocage (42, 45) sont ainsi agencés, lors d'une rotation du tambour dans la direction de rebobinage du mécanisme enrouleur, pour bloquer le tambour et le pignon soleil ensemble et, lors d'une rotation dans la direction opposée, pour relâcher le pignon soleil du tambour et bloquer le porte-planétaire du train planétaire contre la rotation.

4. Un dispositif selon la revendication 2, **caractérisé en ce que** l'intérieur du tambour (56) forme une couronne (55), qui engrène des premiers pignons planétaires (53) sur un porte-planétaire (52), lequel peut être couplé ensemble avec un arbre (32) dans le mécanisme enrouleur (28), **en ce que** des deuxièmes pignons planétaires (54) sur le porte-planétaire sont solidement reliés aux premiers pignons planétaires et engrènent une deuxième couronne (58), et **en ce que** des moyens de blocage sont ainsi agencés, lors d'une rotation du tambour dans la direction de rebobinage du mécanisme enrouleur, pour verrouiller le tambour et le porte-planétaire ensemble et, lors d'une rotation du tambour dans la direction opposée, pour relâcher le tambour du porte-planétaire et bloquer la deuxième couronne contre la rotation.

5. Un dispositif selon l'une quelconque des revendications 1 à 4, **caractérisé en ce que** ladite chambre de cylindre (9) présente une sortie (11), qui communique avec une soupape de décharge (12), qui peut être réglée parmi différents degrés d'ouverture.

6. Un dispositif selon la revendication 5, **caractérisé en ce que** la soupape de décharge (12) est continuellement ajustable parmi différents degrés d'ouverture et une position fermée.

7. Un dispositif selon la revendication 6, **caractérisé en ce que** la soupape de décharge (12) présente un élément de soupape (14) qui peut être réglé par un système servo (17), qui est contrôlé par un groupe régulateur (18) en fonction des signaux provenant d'un détecteur (19) qui détecte le poids de l'occupant.

8. Un dispositif selon la revendication 7, **caractérisé en ce que** ladite chambre de cylindre (9) est délimitée entre le côté du piston (3) opposé à la tige de piston et la deuxième paroi d'extrémité (8) du cylindre, **en ce que** l'élément transmetteur de mouvement (24, 25) est agencé pour faire tourner le mécanisme enrouleur (28) dans la direction de rebobinage de la sangle de ceinture, lorsque le piston est déplacé dans la direction en saillie de la tige de piston (4), **en ce que** le groupe régulateur (18) est coordonné avec un détecteur de position (20) qui détecte la position du véhicule, et **en ce que** le groupe régulateur est agencé pour fermer la soupape de décharge lors d'un signal du capteur de position indiquant que le véhicule est sur le point de se retrouver en sens dessus dessous.
